# EUROPEAN PATENT SPECIFICATION

(11) **EP 1 623 824 B1**
(45) Date of publication and mention of the grant of the patent: **30.03.2016**
(21) Application number: 04733173.1
(22) Date of filing: 14.05.2004
(51) Int. Cl.: B32B 15/08

(54) **PLASTIC-PROCESSING PRODUCT AND METHOD OF PRODUCING THE SAME**
PLASTISCH BEARBEITETER KÖRPER UND VERFAHREN ZU DESSEN HERSTELLUNG
ARTICLE USINE PAR PROCEDE PLASTIQUE ET SON PROCEDE DE FABRICATION

(30) Priority: 15.05.2003 JP 2003137363
(43) Date of publication of application: 08.02.2006
(73) Proprietor: Mitsubishi Steel MFG. CO., LTD., Tokyo 104-8550 (JP)
(72) Inventor: FUKUDA, Yoshizumi, MITSUBISHI STEEL MFG. CO. LTD., Chuo-ku, Tokyo 104-8550 (JP)
(74) Representative: DREISS Patentanwälte PartG mbB
(86) International application number: PCT/JP2004/006907
(87) International publication number: WO 2004/101271

(56) References cited:
- JP-A- 2002 225 174
- JP-A- 2002 235 031
- JP-A- 2002 337 265
- JP-A- 2004 073 936
- JP-U- 60 003 024
- DATABASE WPI Section Ch, Week 200174 Derwent Publications Ltd., London, GB; Class M23, AN 2001-641607 XP002380807 & JP 2001 191178 A (CITIZEN WATCH CO LTD) 17 July 2001 (2001-07-17)

## Description

### BACKGROUND OF THE INVENTION

### Field of the Invention

The present invention relates to thermal plastic processing and a plastic-processing product obtained by using the same and in particular to a composite material comprising a resin and magnesium (alloy) that can be easily processed thermal a plastic-processed product and a method of producing the same.

### Description of the Related Art

A magnesium plate or a magnesium alloy plate is known to have excellent characteristics such as specific strength and thermal diffusion, but upon fabrication, plastic processing, and particularly cold (room temperature) plastic processing are difficult. Accordingly, the magnesium (alloy) plate is used preferably in products such as bodies of electronic instruments such as laptop computers requiring characteristics such as lightweight, high rigidity, electromagnetic wave shielding properties and heat dissipation. However, the magnesium (alloy)plate is problematic in that to molding with a high degree of processing, such as deep drawing and forming of complicated structural position such as ribs and bosses is difficult, and when complicated structural position are formed, additional steps other than plastic processing, for example a step of cutting and a step of joining a plurality of parts, are necessary after plastic processing, thus leading to higher manufacturing costs and lower productivity.

As methods for improving the plastic processing properties, the following two methods have been used: a method in which thermal plastic processing is performed after a lubricant is applied to at least one of a metallic material to be processed or a mold used in processing; and a method in which thermal plastic processing is performed by interposing a fluorine resin sheet between a metallic material and a metal mold. When the lubricant is applied and then heated, however, there arises another problem that the lubricant may burn and stick to the surface of the mold depending on temperature, thus making complete removal of the lubricant difficult after the processing. Further, the fluorine resin sheet is problematic in that it hardly adheres to a metallic material or a mold because of its low surface energy, is difficult to mold in complex shapes, and is thus unsuitable for processing requiring high processability. In both methods, the metallic material after processing requires treatment for surface protection.

Recently, since the method of using a lubricant and the method of interposing a resin sheet have the aforementioned problems, techniques for improving processability by integrally forming a composite of resin and metal have been proposed as other solution methods for the object of molding a magnesium material with a high degree of processing. For example, Japanese Patent Application Laid-Open (JP-A) No. 2001-315162 proposes a technique wherein a metal plate coated with thermoplastic resin is press-molded and then provided with a rib or boss on the thermoplastic resin layer side by in-mold forming.

JP-A No. 7-124995 proposes a method wherein a metallic part is coated with a heat-resistant rubber adhesive or a hot-melt adhesive based on polyurethane or the like, and a resin is injection-molded on the adhesive layer in a position where a rib or boss is to be formed.

The respective techniques described above require thermoplastic resin to be injection-molded for every piece of a desired part and a treatment for improving the adhesion of the resin to a metallic material. For example, the former requires two steps, that is, a step of plastic processing and a step of in-mold forming, in order to achieve necessary molding, and the latter requires two steps, that is, a step of applying an adhesive onto a predetermined position and a step of in-mold forming, and thus there is a problem that the production process is complex and poor in productivity, materials of the thermoplastic resin to be injection-molded are limited and the like.

When a resin poor in heat resistance suitable for in-mold forming of ribs and the like is used, a uniform coating is difficult to maintained under heating conditions necessary for plastic processing of magnesium (alloy), and cannot be applied to plastic processing involving high-temperature heating.

JP 2002 225174 A refers to a formed article of magnesium or a magnesium alloy the surface of which is covered by a resin film or a metal foil. As a magnesium processed article has a problem in that it is easily oxidized and forms an oxidation film on the surface thereof, as it is disclosed in this document, the objective was, to provide a magnesium formed article which is superior in oxidation resistance and damage resistance. Therefore, the processed article is covered on its surface with a resin film or a metal foil.

JP 2002 337265 A discloses a plural layer sheet and a package material using the same which is composed of a resin film layer as a substrate and a magnesium film layer formed on the resin film layer. The resin film layer is composed of known plastic material having a thickness from 0,1 µm to 2 mm. The magnesium film layer has a thickness from about 5 to 1000 Å.

JP 2002 235031 A discloses a coating binder using an acrylic resin for disposing on an adhered metal. However this coating binder is not a heat-resistant resin having a melting point or pyrolysis temperature of 250°C or more. The same applies to the coating binder being a normal temperature-drying resin as disclosed in JP 60 00324 U.

JP 2001 191178 A refers to a torch nozzle and a contact tip which are coated with a heat-resistant resin having non-adhesive particles.

Document JP 2004 073936 A describes a coating film that provides abrasion resistance and good appearance on the surface of a metal material.

In consideration of the problems described above, an object of the invention is to provide a magnesium (alloy) composite material suitable for thermal plastic processing (thermal plastic working), which can be easily molded by thermal plastic processing without using a lubricant or the like, even in processing requiring a high degree of processing, such as deep drawing and formation of complex shapes such as ribs and bosses. Another object of the invention is to provide a plastic magnesium (alloy) product obtained from the composite material by thermal plastic processing.

These objects are solved by using the features of claim 1 and claim 13, respectively.

### SUMMARY OF THE INVENTION

As a result of study, the present inventors found that the problem described above can be solved by forming a heat-resistant resin coating on a magnesium (alloy) plate, and the invention was thereby completed.

That is, the composite material of the invention used in thermal plastic processing posses a coating layer including a heat-resistant resin having a melting point or pyrolysis temperature of 250°C or more disposed on a surface of at least one side of a magnesium plate or a magnesium alloy plate.

The heat-resistant resin is preferably a thermosetting resin, and more preferably a thermosetting polyimide resin.

From the viewpoint of effect, the thickness of the coating layer is preferably in the range of 1 to 250 µm.

The plastic-processed product of the invention possesses a plastic-processing product molded by plastic processing, under heating conditions of 100 to 350°C, and comprising a composite material for use in thermal plastic processing, which includes a coating layer formed of a heat-resistant resin having a melting point or pyrolysis temperature of 250°C or more disposed on a surface of at least one side of a magnesium plate or a magnesium alloy plate.

In this specification, "magnesium or a magnesium alloy" is sometimes referred to as "magnesium (alloy)".

The composite material in a sheet form having a heat-resistant resin coating layer serves as a lubricant which when plastic processed using a mold heated for the purpose of obtaining a plastic-processing product (molded product), moderates direct stress from the mold to the surface of a metal plate by being interposed between the metallic material and the mold and reduces the frictional force between the workpiece and the mold by the resin coating layer being softer than the metal. Therefor, a plastic-processing product of complicated shape can be easily obtained from a magnesium (alloy) plate which in the absence of an intervening lubricant or resin sheet, would be difficult to plastic processing.

The resin used for this purpose in the resin coating layer should be superior in heat resistance. That is, the shape of the coating resin layer should be maintained without melting or pyrolysis under heating conditions of plastic processing. The feature "without melting or pyrolysis under the heating conditions of plastic processing" requires that, for example, a heat-resistant resin having a melting point or pyrolysis temperature of 250°C or more should be used taking it into consideration that the resin coating layer itself may be softened to some degree, but the resin coating layer, if flowing out in a fluidic state during plastic processing or if its functions are deteriorated by pyrolysis or carbonization, cannot achieve the effect of the invention.

By the presence of the resin coating layer, thermal plastic processing is made feasible without using a lubricant, thus making it unnecessary to conduct the step of removing a lubricant by degreasing and washing, which is usually carried out after processing.

This resin coating layer may be disposed on at least one side, but is preferably disposed on both sides. Particularly when thermal plastic processing of high processability is conducted with a mold having complex concave and convex regions, the effect of the invention is exhibited on the contact surface between the mold and both sides by adisporsing the resin coating layer preferably on both the sides.

The plastic-processing product processed by using the composite material of the invention is advantageous in that after the plastic processing is finished, the resin coating layer remains on the surface of the plastic-processing product, thus making it unnecessary to conduct surface treatment for preventing oxidation or marring of the surface, which is usually conducted after the plastic processing.

### BRIEF DESCRIPTION OF THE DRAWINGS

Fig. 1 is an illustrative sectional view showing one embodiment of the composite material of the present invention wherein a resin coating layer made of polyimide resin is formed on the surface of a magnesium alloy plate.
Fig. 2 is an illustrative sectional view showing a domed plastic-processing product formed in Example 1 of the invention.

### DESCRIPTION OF THE PREFERRED EMBODIMENT

Hereinafter, the present invention is described in more detail by reference to the examples.

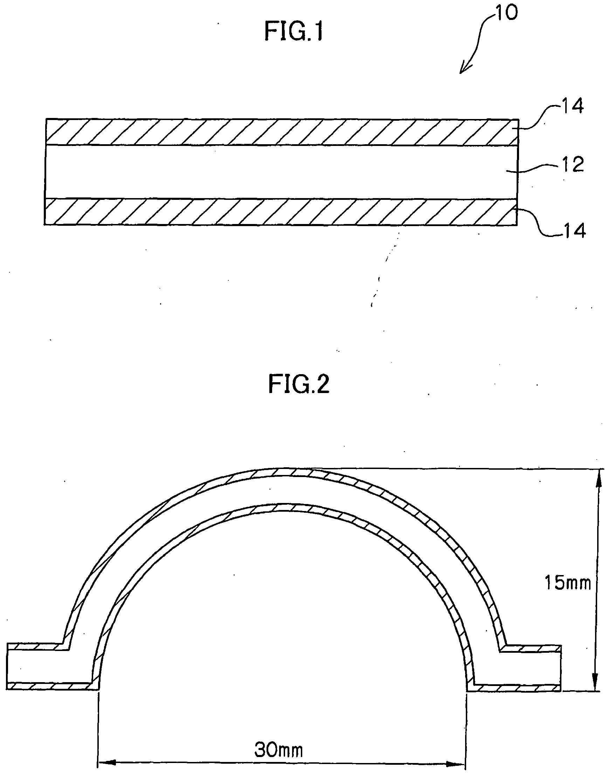

Fig. 1 is an illustrative sectional view showing one embodiment of the composite material 10 of the invention wherein a resin coating layer 14 of 10 µm in thickness made of polyimide resin is formed on both sides of a magnesium alloy plate 12 of 0.1 mm in thickness. To form the resin coating layer on the magnesium (alloy) plate, a known method can be used, and specifically, typical methods include a coating method that involves applying a resin material onto the surface of a magnesium (alloy) plate to form a coating and a lamination method that involves forming a film based on resin and then laminating the film.

The constitution of the composite material of the invention and the method of producing the same are described in this order.

First, magnesium (alloy) is formed into a sheet and used as a substrate. The thickness of this sheet is suitably selected depending on the characteristics of an intended molded product, but is preferably in the range of 0.03 to 5.0 mm from the viewpoint of workability in plastic processing.

The substrate in a sheet form is washed and degreased in a usual manner to remove stains and oil from the surface. Then to improve the adhesion of the substrate to a resin coating layer to be formed, the surface of the substrate may be subjected to, for example, pretreatment such as coating with an adhesion improver or treatment for roughening the surface.

In this embodiment, the case where the substrate in a sheet form is used as a material to be subjected to plastic processing will be described, however the material to be processed is not limited thereto, and a linear magnesium (alloy) base material can be subjected to plastic processing to form a coil.

When the resin coating layer is formed by a coating method on the surface of a base material, of a heat melting method that involves applying heat-molten resin in a usual manner onto the surface of the substrate and then cooling it to room temperature to form a resin coating layer, or a solution coating method that involves drying a resin solution (dispersion) having a resin dispersed or dissolved in a solvent thereby removing the solvent, to form a resin coating layer can be used.

In the method of applying a liquid resin composition, various techniques can be used. Examples of those techniques include spray coating, dip coating, bar coater coating, roll coater coating, curtain coating, air knife coating, blade coating and the like.

In the invention, a thin and uniform resin coating layer is preferably arranged from the viewpoint of the effect, and for this purpose, bar coater coating, roll coater coating and blade coating are particularly preferable among those techniques mentioned above.

On the other hand, when the resin can be applied as a powdery composition onto the surface of a base material, the resin is applied by electrostatic powder coating and then baked in an oven to form a coating.

Preparation of a coating by electrodeposition coating can also be preferably used.

When the heat-resistant resin layer is formed by the lamination method, a resin film is bonded to a substrate by lamination to form a resin coating layer, wherein an adhesive may be applied if necessary onto the surface of the substrate. The resin film used in lamination is formed in a thickness adapted to the thickness of the intended resin coating layer by a known method adapted to the characteristics of the resin used. In the step of laminating the resulting resin film on a substrate, the resin film is preferably heated and pressure-bonded to improve the adhesion of the resin coating layer. The heating temperature can be suitably selected depending on the characteristics of the resin. Usually, the substrate and the resin film to be laminated thereon are heated and pressure-bonded with a pair of press rolls, at least one of which is provided with a heating means.

The thickness of the resin coating layer can be suitably determined depending on the properties of an intended molded product, the thickness of the substrate, a shape processed, and the type of resin used. By forming a thin and uniform resin coating layer, plastic processing is facilitated and, the metal plate is prevented from cracking during in plastic processing. Further physical properties such as vibration properties and feel of the material, such as metallic gloss and a tactile sensation of the magnesium (alloy) after processing do not deteriorate. Thus in consideration of these advantages together with improvement in workability, the thickness of the resin coating layer is preferably 1 to 250 µm.

The resin coating layer may be disposed on at least one side of a magnesium (alloy) substrate, but is preferably disposed on both sides of the substrate. Since magnesium (alloy) is easily oxidized, various countermeasures should be taken to protect its surface during storage before processing, and after processing, but when the resin coating layer is present on the surface as shown in the invention, the coating layer prevents the air (oxygen) from contacting directly with the surface of the substrate to prevent oxidation, thus making it unnecessary to regulate a handling atmosphere, causing another advantage of further improving in handling properties.

In the invention, the resin for forming the heat-resistant resin coating layer should maintain the shape of the resin coating layer even under the temperature condition of plastic processing, and therefore, the heat-resistant resin having a melting point or pyrolysis temperature of 150°C or more should be used, but under these conditions, the surface may softened.

The heat-resistant resin may be thermoplastic resin or thermosetting resin insofar as it has a melting point or pyrolysis temperature of 150°C or more, but the thermosetting resin is preferably used because this resin is liquid at ordinary temperatures, can easily form a thin and uniform coating by bring heated, and hardly changes its coating properties even when heated in plastic processing.

Hereinafter, examples of the resin suitable for forming the heat-resistant resin coating layer in the invention are described, but the invention is not limited thereto.

The thermosetting resin includes epoxy resin, silicone resin, polyimide resin and the like.

In particular, the surface of magnesium (alloy) is easily oxidized so that breakage may occur in oxidized sites at the time of heating processing, or when the surface oxide layer is removed after the processing, the strength of that region may be lowered, and thus the surface of the metal is preferably protected by a resin coating layer that is difficult to change even under the heating conditions at the time of plastic processing and having sufficient hardness and stretchability, and from this viewpoint, polyimide resin excellent in self-lubricating properties is used preferably in the resin coating layer. The polyimide resin is also advantageous in that it has transparency to make use of metallic gloss on the surface of the magnesium (alloy) plate, and even upon combustion, dose not generated toxic substances such as dioxin.

In particular, polyimide resin which can be obtained from resin having a pyrolysis temperature of higher than 300°C by introducing an annular structure into the rasins molecule is preferable, and block copolymer polyimide obtained by polycondensation of tetracarboxylic dianhydride with aromatic diamine in the presence of an acid catalyst consisting of a lactone compound and a base can be preferably used.

Thermoplastic resin can also be used in the invention insofar as it is heat-resistant resin used widely as engineering plastics. Specific examples include polyamide resin, polyphenylene sulfide resin, polyether ketone resin, polyether imide resin, polyamide imide resin, and fluorine resin.

From these resins, the resin constituting the resin coating layer of the invention can be selected depending on the object. These resins can be used alone or as a mixture of two or more. Further a resin to which additives such as a heat resistance improver are added may be used, or a resin whose heat resistance is improved by improving the density of crosslinkages by adding a crosslinking agent may also be used.

The composite material of the invention thus obtained is subjected to plastic processing to give a molded product (plastic-processed product). In the step of plastic processing, the composite material is set in a mold so as to allow its resin coating layer to contact with the mold, and then metallic press-molded while the mold is being heated to 100 to 350°C, to give a desired plastic-processing product of magnesium (alloy). The plastic-processing product thus obtained has improvements in plastic workability of the magnesium (alloy) plate, and thus deep drawing and molding of regions having fine members such as ribs and bosses can be effected by integral molding using thermal plastic processing.

### EXAMPLES

Hereinafter, the present invention is described in more detail by reference to the Examples, but the invention is not limited thereto.

### Example 1

The surface of a magnesium alloy plate (AZ31) of 0.1 mm in thickness was degreased, acid cleaning, and then coated with polyimide resin (weight-average molecular weight, 70,000; pyrolysis temperature, 420°C) by a coating method and cured by heating at 250°C for 30 minutes, whereby a composite material 10 comprising a polyimide resin coating layer 14 of 10 µm in thickness formed on both sides of a magnesium alloy plate 12, as shown in Fig. 1, was obtained.

The composite material 10 was press-molded with a mold heated at 300°C, to form a domed product of 30 mm in diameter and 15 mm in height for speaker diaphragm, as shown in Fig. 2.

When the outward appearance of the product after molding was visually observed, it was found that the product was free of cracking and did not exhibit deterioration in the outward appearance due to plastic processing, to show good plastic workability.

### Comparative Example 1

A composite material comprising a polyester resin coating layer formed on both sides of a magnesium alloy plate was obtained in the same manner as in Example 1 except that polyester resin (weight-average molecular weight, 40,000; melting point, 100°C) was used as the resin in the resin coating layer.

This composite material was subjected to plastic processing in the same manner as in Example 1.

When the outward appearance of the product after molding was visually observed, fusion and partial release of the resin coating layer and oxidization of the surface of the magnesium alloy were observed.

According to the invention, there can be provided a resin/magnesium (alloy) composite material which can be easily molded by thermal plastic processing without using a lubricant or the like, even in processing requiring a high degree of processing, such as deep drawing and formation of complex shapes such as ribs and bosses. Further, by using the composite material of the invention, a thermal plastic-processing product of magnesium (alloy) in a complex shape can be easily obtained, and surface treatment after processing can be omitted.

## Claims

1. A plastic-processing product molded by plastic processing of a composite material, wherein the composite material includes a coating layer formed of a heat-resistant resin having a melting point or pyrolysis temperature of 250°C or more disposed on a surface of a least one side of a magnesium plate or a magnesium alloy plate, and the plastic processing is a processing that performs metal press molding on the composite material while heating a mold to 100 to 350°C.

2. A plastic-processing product according to claim 1, wherein the heat-resistant resin is a thermosetting resin.

3. A plastic-processing product according to claim 1, wherein the heat-resistant resin is a thermosetting resin selected from epoxy resin, silicone resin and polyimide resin.

4. A plastic-processing product according to claim 3, wherein the thermosetting resin is polyimide resin.

5. A plastic-processing product according to claim 3, wherein the thermosetting resin is polyimide resin having an annular structure in its molecule and having a pyrolysis temperature of higher than 300°C.

6. A plastic-processing product according to claim 4, wherein the polyimide resin is a block copolymer polyimide of tetracarboxylic dianhydride and aromatic diamine.

7. A plastic-processing product according to claim 1, wherein the heat-resistant resin is a thermoplastic resin selected from polyamide resin, polyphenylene sulfide resin, polyether ketone resin, polyether imide resin, polyamide imide resin and fluorine resin.

8. A plastic-processing product according to claim 1, wherein the thickness of the coating layer including the heat-resistant resin is in a range of 1 to 250 µm.

9. A plastic-processing product according to claim 1, wherein the thickness of the magnesium plate or the magnesium alloy plate is in a range of 0.03 to 5.0 mm.

10. A plastic-processing product according to claim 1, wherein coating layers are disposed on both sides of the magnesium plate or the magnesium alloy plate.

11. A plastic-processing product according to claim 1, wherein the heat-resistant resin has self-lubricating properties.

12. A method of producing a plastic-processing product molded by plastic processing of a composite material, wherein the composite material includes a coating layer formed of a heat-resistant resin having a melting point or pyrolysis temperature of 250°C or more disposed on a surface of at least one side of a magnesium plate or a magnesium alloy plate, and the plastic processing is a processing that performs metal press molding on the composite material while heating a mold to 100 to 350°C.

13. A method according to claim 12, wherein the heat-resistant resin is a thermosetting resin.

14. A method according to claim 12, wherein the heat-resistant resin is a thermosetting resin selected form epoxy resin, silicone resin and polyimide resin.

15. A method according to claim 14, wherein the thermosetting resin is polyimide resin.

16. A method according to claim 14, wherein the heat-resistant resin is polyimide resin having an annular structure in its molecule and having a pyrolysis temperature of higher than 300°C.

17. A method according to claim 15, wherein the polyimide resin is a block copolymer polyimide of tetracarboxylic dianhydride and aromatic diamine.

18. A method according to claim 12, wherein the heat-resistant resin is a thermoplastic resin selected from polyamide resin, polyphenylene sulfide resin, polyether ketone resin, polyether imide resin, polyamide imide resin and fluorine resin.

19. A method according to claim 12, wherein the thickness of the coating layer including the heat-resistant resin is in a range of 1 to 250 µm.

20. A method according to claim 12, wherein the thickness of the magnesium plate or the magnesium alloy plate is in a range of 0.03 to 5.0 mm.

21. A method according to claim 12, wherein coating layers are disposed on both sides of the magnesium plate or the magnesium alloy plate.

22. A method according to claim 12, wherein the heat-resistant resin has self-lubricating properties.

## Patentansprüche

1. Umformungsprodukt, geformt durch Umformung eines Verbundmaterials, wobei das Verbundmaterial eine Beschichtungsschicht enthält, die aus einem wärmebeständigen Harz gebildet ist, das einen Schmelzpunkt oder eine Pyrolysetemperatur von 250 °C oder mehr hat und auf einer Oberfläche mindestens einer Seite einer Magnesiumplatte oder einer Magnesiumlegierungsplatte angeordnet ist, wobei die Umformung eine Verarbeitung ist, bei welcher eine Metallpressformung an dem Verbundmaterial durchgeführt wird, während ein Formwerkzeug auf 100 bis 350 °C erwärmt ist.

2. Umformungsprodukt nach Anspruch 1, wobei das wärmebeständige Harz ein duroplastisches Harz ist.

3. Umformungsprodukt nach Anspruch 1, wobei das wärmebeständige Harz ein duroplastisches Harz ist, das ausgewählt ist aus Epoxidharz, Silikonharz und Polyimidharz.

4. Umformungsprodukt nach Anspruch 3, wobei das duroplastisches Harz Polyimidharz ist.

5. Umformungsprodukt nach Anspruch 3, wobei das thermoplastische Harz Polyimidharz ist, das eine Ringstruktur in seinem Molekül hat und eine Pyrolysetemperatur von mehr als 300 °C hat.

6. Umformungsprodukt nach Anspruch 4, wobei das Polyimidharz ein Blockcopolymer-Polyimid aus Tetracarboxyldianhydrid und aromatischem Diamin ist.

7. Umformungsprodukt nach Anspruch 1, wobei das wärmebeständige Harz ein thermoplastisches Harz ist, das ausgewählt ist aus Polyamidharz, Polyphenylensulfidharz, Polyetherketonharz, Polyetherimidharz, Polyamidimidharz und Fluorharz.

8. Umformungsprodukt nach Anspruch 1, wobei die Dicke der das wärmebeständige Harz enthaltenden Beschichtungsschicht im Bereich von 1 bis 250 µm liegt.

9. Umformungsprodukt nach Anspruch 1, wobei die Dicke der Magnesiumplatte oder der Magnesiumlegierungsplatte in einem Bereich von 0,03 bis 5,0 mm liegt.

10. Umformungsprodukt nach Anspruch 1, wobei Beschichtungsschichten auf beiden Seiten der Magnesiumplatte oder der Magnesiumlegierungsplatte angeordnet sind.

11. Umformungsprodukt nach Anspruch 1, wobei das wärmebeständige Harz selbstschmierende Eigenschaften hat.

12. Verfahren zur Herstellung eines Umformungsprodukts, das durch Umformung eines Verbundmaterials geformt wird, wobei das Verbundmaterial eine Beschichtungsschicht enthält, die aus einem wärmebeständigen Harz gebildet ist, das einen Schmelzpunkt oder eine Pyrolysetemperatur von 250 °C oder mehr hat und auf einer Oberfläche mindestens einer Seite einer Magnesiumplatte oder einer Magnesiumlegierungsplatte angeordnet ist, wobei die Umformung eine Verarbeitung ist, bei welcher eine Metallpressformung an dem Verbundmaterial durchgeführt wird, während ein Formwerkzeug auf 100 bis 350 °C erwärmt wird.

13. Verfahren nach Anspruch 12, wobei das wärmebeständige Harz ein duroplastisches Harz ist.

14. Verfahren nach Anspruch 12, wobei das wärmebeständige Harz ein duroplastisches Harz ist, das ausgewählt ist aus Epoxidharz, Silikonharz und Polyimidharz.

15. Verfahren nach Anspruch 14, wobei das duroplastische Harz Polyimidharz ist.

16. Verfahren nach Anspruch 14, wobei das thermoplastische Harz Polyimidharz ist, das eine Ringstruktur in seinem Molekül hat und eine Pyrolysetemperatur von mehr als 300 °C hat.

17. Verfahren nach Anspruch 15, wobei das Polyimidharz ein Blockcopolymer-Polyimid aus Tetracarboxyldianhydrid und aromatischem Diamin ist.

18. Verfahren nach Anspruch 12, wobei das wärmebeständige Harz ein thermoplastisches Harz ist, das ausgewählt ist aus Polyamidharz, Polyphenylensulfidharz, Polyetherketonharz, Polyetherimidharz, Polyamidimidharz und Fluorharz.

19. Verfahren nach Anspruch 12, wobei die Dicke der das wärmebeständige Harz enthaltenden Beschichtungsschicht im Bereich von 1 bis 250 µm liegt.

20. Verfahren nach Anspruch 12, wobei die Dicke der Magnesiumplatte oder der Magnesiumlegierungsplatte in einem Bereich von 0,03 bis 5,0 mm liegt.

21. Verfahren nach Anspruch 12, wobei Beschichtungsschichten auf beiden Seiten der Magnesiumplatte oder der Magnesiumlegierungsplatte angeordnet sind.

22. Verfahren nach Anspruch 12, wobei das wärmebeständige Harz selbstschmierende Eigenschaften hat.

## Revendications

1. Produit usiné par procédé plastique moulé par procédé plastique d'un matériau composite, dans lequel le matériau composite comprend une couche de revêtement constituée d'une résine thermorésistante ayant un point de fusion ou une température de pyrolyse au moins égale à 250 °C disposée sur une surface d'au moins un côté d'une plaque de magnésium ou d'une plaque d'alliage de magnésium, et le procédé plastique est un procédé qui effectue le moulage à la presse de métal sur le matériau composite en chauffant un moule entre 100 et 350 °C.

2. Produit usiné par procédé plastique selon la revendication 1, dans lequel la résine thermorésistante est une résine thermodurcissable.

3. Produit usiné par procédé plastique selon la revendication 1, dans lequel la résine thermorésistante est une résine thermodurcissable choisie parmi la résine époxyde, la résine de silicone et la résine de polyimide.

4. Produit usiné par procédé plastique selon la revendication 3, dans lequel la résine thermodurcissable est une résine de polyimide.

5. Produit usiné par procédé plastique selon la revendication 3, dans lequel la résine thermodurcissable est une résine de polyimide ayant une structure annulaire dans sa molécule et ayant une température de pyrolyse supérieure à 300 °C.

6. Produit usiné par procédé plastique selon la revendication 4, dans lequel la résine de polyimide est un polyimide copolymère bloc de dianhydride tétracarboxylique et diamine aromatique.

7. Produit usiné par procédé plastique selon la revendication 1, dans lequel la résine thermorésistante est une résine thermoplastique choisie parmi la résine polyamide, la résine de polysulfure de phénylène, la résine de polyéther cétone, la résine de polyéther imide, la résine de polyamide imide et la résine fluorée.

8. Produit usiné par procédé plastique selon la revendication 1, dans lequel l'épaisseur de la couche de revêtement incluant la résine thermorésistante est comprise entre 1 et 250 µm.

9. Produit usiné par procédé plastique selon la revendication 1, dans lequel l'épaisseur de la plaque de magnésium ou de la plaque d'alliage de magnésium est comprise entre 0,03 et 5,0 mm.

10. Produit usiné par procédé plastique selon la revendication 1, dans lequel les couches de revêtement sont disposées sur les deux côtés de la plaque de magnésium ou de la plaque d'alliage de magnésium.

11. Produit usiné par procédé plastique selon la revendication 1, dans lequel la résine thermorésistante possède des propriétés autolubrifiantes.

12. Procédé de production d'un produit usiné par procédé plastique moulé par procédé plastique d'un matériau composite, dans lequel le matériau composite comprend une couche de revêtement constituée d'une résine thermorésistante ayant un point de fusion ou une température de pyrolyse au moins égal(e) à 250 °C disposée sur une surface d'au moins un côté d'une plaque de magnésium ou d'une plaque d'alliage de magnésium, et le procédé plastique est un procédé qui effectue le moulage à la presse de métal sur le matériau composite en chauffant un moule entre 100 et 350 °C.

13. Procédé selon la revendication 12, dans lequel la résine thermorésistante est une résine thermodurcissable.

14. Procédé selon la revendication 12, dans lequel la résine thermorésistante est une résine thermodurcissable choisie parmi la résine époxyde, la résine de silicone et la résine de polyimide.

15. Procédé selon la revendication 14, dans lequel la résine thermodurcissable est une résine de polyimide.

16. Procédé selon la revendication 14, dans lequel la résine thermorésistante est une résine de polyimide ayant une structure annulaire dans sa molécule et ayant une température de pyrolyse supérieure à 300 °C.

17. Procédé selon la revendication 15, dans lequel la résine de polyimide est un polyimide copolymère bloc de dianhydride tétracarboxylique et diamine aromatique.

18. Procédé selon la revendication 12, dans lequel la résine thermorésistante est une résine thermoplastique choisie parmi la résine polyamide, la résine de polysulfure de phénylène, la résine de polyéther cétone, la résine de polyéther imide, la résine de polyamide imide et la résine fluorée.

19. Procédé selon la revendication 12, dans lequel l'épaisseur de la couche de revêtement incluant la résine thermorésistante est comprise entre 1 et 250 µm.

20. Procédé selon la revendication 12, dans lequel l'épaisseur de la plaque de magnésium ou de la plaque d'alliage de magnésium est comprise entre 0,03 et 5,0 mm.

21. Procédé selon la revendication 12, dans lequel les couches de revêtement sont disposées sur les deux côtés de la plaque de magnésium ou de la plaque d'alliage de magnésium.

22. Procédé selon la revendication 12, dans lequel la résine thermorésistante possède des propriétés autolubrifiantes.
